# EUROPEAN PATENT APPLICATION

(11) **EP 2 757 845 A1**
(43) Date of publication of application: **23.07.2014**
(21) Application number: 13188077.5
(22) Date of filing: 10.10.2013
(51) Int. Cl.: H04W 72/04, H04W 28/02

(54) **A network node and a method therein for downlink transmission to a mobile device**

(30) Priority: 18.01.2013 US 201361754171 P
(71) Applicant: Telefonaktiebolaget L M Ericsson AB (Publ), 164 83 Stockholm (SE)
(72) Inventor: Lohmar, Thorsten, 52074 Aachen (SE); Sintorn, Mathias, 191 41 Sollentuna (SE); Eriksson, Ann-Christine, 749 51 Grillby (SE)
(74) Representative: Kühn, Friedrich Heinrich

(57) **Abstract**

A Network Node and a method performed by the Network Node for downlink and/or uplink transmission between the Network Node and a mobile device are provided. The Network Node is operable in a Radio Access Network, RAN, of a wireless communication network. The method comprising receiving (110), from a node in a core network of the wireless communication network, a user profile of the mobile device, and determining (120) a resource usage level of the Network Node. The method further comprises scheduling (130) a downlink and/or uplink transmission between the Network Node and the mobile device based on both the user profile and the resource usage level.

## Description

### Technical field

The present disclosure relates to a method performed in a Network Node in a Radio Access Network and a network node.

### Background

The different wireless communication networks are constantly evolving and both new radio techniques as well as new services are being introduced. The wireless communication networks are offering both a vast variety of different services and a vast variety of different subscriptions.

Different services may require different transmission capacity and the different subscriptions may provide a subscriber with different services and with different conditions. In order to provide users with the different services in accordance with their subscriptions and associated conditions, different policy enforcements exist. For example, a certain policy may result in a certain Quality-of-Service, QoS, profile for a given bearer. The QoS profile will provide information to the Radio Access Network, RAN, how to treat the bearer both in terms of scheduling and in terms of capacity management.

The RAN may be able to prioritise traffic on certain bearers depending on the QoS profile. Depending on the QoS profile, the RAN may also control the bitrate for the bearer so that a certain maximum bitrate is not exceeded. However, with the diversity of different mobile devices, their capabilities, the diversity of services requiring different amount of downlink transmissions and the diversity of subscriptions available for users of mobile devices, this prioritisation is not enough.

Reference is made to 3^{rd} Generation Partnership Project, 3GPP, TS 23.060 v.11.0.0, chapter 9.2.2.

### Summary

The object is to obviate at least some of the problems outlined above. In particular, it is an object to provide a Network Node and a method performed by the Network Node for uplink and/or downlink transmission to a mobile device. These objects and others may be obtained by providing a Network Node and a method in a Network Node according to the independent claims attached below.

According to an aspect, a method performed by a Network Node in a Radio Access Network, RAN, of a wireless communication network for transmission between the Network Node and a mobile device are provided. The method comprises receiving, from a node in a core network of the wireless communication network, a user profile of the mobile device, and determining a resource usage level of the Network Node. The method further comprises scheduling a transmission between the Network Node and the mobile device based on both the user profile and the resource usage level.

According to an aspect, a Network Node operable in a Radio Access Network, RAN, of a wireless communication network adapted for transmission between the Network Node and a mobile device are provided. The Network Node comprises a receiving unit adapted for receiving, from a node in a core network of the wireless communication network, a user profile of the mobile device; a determining unit adapted for determining a resource usage level of the Network Node. The Network Node further comprises a scheduling unit adapted for scheduling a transmission between the Network Node and the mobile device based on both the user profile and the resource usage level.

The Network Node and the method performed by the Network Node may have several advantages. Dynamic policy enforcement is achieved depending on e.g. the current resource usage level of the Network Node. In case the Network Node is close to, or reaches, a certain level of resource usage, the Network Node may take measures to avoid any possible increase of the resource usage level in order to avoid an overload or congestion situation. The Network Node is enabled to make prioritisations and/or apply different bitrates by using the resource usage level in combination with the user profile of the mobile device. Still further, there is no need for extensive signalling between the Network Node and the core network of the communication network in case of a overload or congestion situation in order for the core network to provide the Network Node with instructions how to handle the situation. Any additional signalling in an overload or congestion situation should be avoided as such signalling may further increase the overload or congestion situation of the Network Node.

### Brief description of drawings

Embodiments will now be described in more detail in relation to the accompanying drawings, in which:

Figure 1 is a flowchart of a method performed by a Network Node for downlink and/or uplink transmission between the Network Node and a mobile device according to an exemplifying embodiment.

Figure 2 is a block diagram of an RBS adapted for downlink and/or uplink transmission between the Network Node and a mobile device according to an exemplifying embodiment.

Figure 3 is a signalling diagram for creating a dedicated bearer according to an exemplifying embodiment.

Figure 4 is a block diagram of an arrangement in an RBS for downlink and/or uplink transmission between the Network Node and a mobile device according to an exemplifying embodiment.

### Detailed description

Briefly described, a Network Node and a method performed by the Network Node for downlink and/or uplink transmission between the Network Node and a mobile device are provided. The Network Node is adapted to take both a current usage level of the Network Node as well as a user profile of the mobile device into account when scheduling transmission between the Network Node and the mobile device.

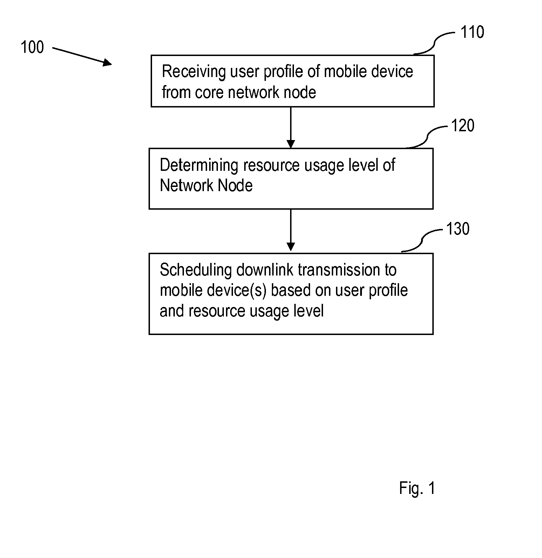

Such a method for transmission to and/or from a mobile device will now be described with reference to figure 1. The method is performed by the Network Node and the Network Node is operable in a Radio Access Network, RAN, of a wireless communication network.

Figure 1 illustrates the method comprising receiving 110, from a node in a core network of the wireless communication network, a user profile of the mobile device, and determining 120 a resource usage level of the Network Node. The method further comprises scheduling 130 a transmission between the Network Node and the mobile device based on both the user profile and the resource usage level.

The Network Node is operable in an RAT of a wireless communication network. In other words, the Network Node is responsible for scheduling downlink and uplink transmission(s) to/from mobile devices which are currently being served by the Network Node. A mobile device may be any device or equipment comprising radio circuitry so that the mobile device is enabled to communicate with the communication network via the Network Node. Some non-limiting examples of a mobile device are a mobile telephone, a personal digital assistant, a laptop or computer, a user equipment, and a machine-to machine communication device.

As stated above, the Network Node is responsible for scheduling transmission(s) to and/or from mobile devices which are currently being served by the Network Node. In order for the Network Node to strive for fairness, ascertaining correct QoS, avoid overload and so on, the Network Node does not blindly schedule transmissions to/from the mobile devices. It might further be beneficial to have different QoS profiles depending on RAN load when scheduling the transmissions between the Network Node and the mobile device. For example, one Maximum bitrate can be allowed for a user during low load situations, while a lower Maximum bitrate is needed at high load.

When the Network Node is to schedule a transmission to and/or from a mobile device, the Network Node receives a user profile of the mobile device, from a node in a core network of the wireless communication network. The user profile may be received as soon as the Network Node starts serving the mobile device, or as soon as the mobile device is connected to the Network Node. The mobile device may be switched on from a powered-off mode or the mobile device may be handed over from a neighbouring Network Node to this Network Node, which is to schedule the transmission between the Network Node and the mobile device. This implies that the Network Node may receive the user profile of the mobile device some time before the Network Node actually schedules any transmission to and/or from the mobile device. Also, in case the Network Node is to schedule a subsequent transmission to and/or from the mobile device, the user profile needs not be received anew, since the Network Node may store the user profile of the mobile device when it is firstly received from the node in the core network of the wireless communication network. The user profile may comprise a plurality of different parameters associated with the mobile device, which will be explained in more detail below.

The Network Node also determines a resource usage level of the Network Node. The resource usage level of the Network Node may be determined in different ways, which will be explained in more detail below. The resource usage level provides an indication, or a measure, of how busy the Network Node is. The Network Node may be serving a large amount of individual mobile devices and/or some mobile devices may be making use of services which require a large amount of downlink and/or uplink transmissions. The larger or higher the resource usage level of the Network Node, the less capacity or resources are left for any new mobile device currently having transmissions and/or the less capacity or resources are left for initiating any service(s) resulting in extensive transmissions between the Network Node and the mobile device.

The Network Node then schedules a transmission to and/or from the mobile device based on both the user profile and the resource usage level. This means that the Network Node considers both the user profile of the mobile device and the current resource usage level of the Network Node when making its scheduling decision for transmission to and/or from the mobile device.

The method performed by the Network Node may have several advantages. Dynamic policy enforcement is achieved depending on e.g. the current resource usage level of the Network Node. In case the Network Node is close to, or reaches, a certain level of resource usage, the Network Node may take measures to avoid any possible increase of the resource usage level in order to avoid an overload or congestion situation. The Network Node is enabled to make prioritisations and/or apply different bitrates based upon the resource usage level in combination with the user profile of the mobile device. Still further, there is no need for extensive signalling between the Network Node and the core network of the communication network in case of a overload or congestion situation in order for the core network to provide the Network Node with instructions how to handle the situation. Any additional signalling in an overload or congestion situation should be avoided as such signalling may further increase the overload or congestion situation of the Network Node.

According to an embodiment, determining the resource usage level of the Network Node comprises comparing a current usage level of radio resources with a first resource threshold.

The Network Node has a certain amount of radio resources at hand that may be used for downlink and/or uplink transmissions. The amount of radio resources may depend on e.g. the number of frequencies assigned to the Network Node. The higher the number of frequencies, the lager the amount of radio resources is available. The frequencies may be assigned to the Network Node during e.g. cell planning of the RAN or the frequencies assigned to the Network node may be signalled to the Network Node, e.g. from an Operation, Administration and Maintenance, OAM, server.

There may be several different thresholds defined with regards to the current usage level of radio resources of the Network Node. The possible plurality of thresholds provides the Network Node with information of the amount of radio resources currently being used out of the available radio resources. The thresholds may be expressed as a percentage of the available radio resources currently being in use. Merely as an example, there may be three thresholds one for 30%, one for 50% and one for 70%. This provides the Network Node with information that e.g. less that 30% of the available radio resources are currently being used, which may correspond to a low resource usage level; or that less than 50% of the available radio resources are currently being used, which may correspond to a medium resource usage level; or that more than 70% of the available radio resources are currently being used, which may correspond to a high resource usage level. Again, this is merely an illustrative example and there may be just one threshold, two thresholds or more than three thresholds and the values of the different thresholds (if more than one) may be defined by e.g. the OAM server or it/they may be predefined in the Network Node.

According to an embodiment, determining 120 a resource usage level of the Network Node comprises comparing a current usage level of a subset of radio resources with a second resource threshold.

Different radio resources, e.g. different bearers, may be of more interest than other, or may be more critical than others. In such a scenario, the usage level of the Network Node is determined with regards to those radio resources, wherein those radio resources constitute a subset of all radio resources of the Network Node. One example of dividing the radio resources into different subsets is that the radio resources are associated with different capacity or with different priorities or different QoS. Then radio resources having the same or similar capacity, priorities and/or QoS are grouped together in a subset of radio resources.

According to still an embodiment, determining the resource usage level of the Network Node comprises comparing a current load of a processing unit of the Network Node with a first load threshold.

This is another example of a measure of the resource usage level of the Network Node. The Network Node is in this example equipped with a processing unit or control unit which controls the Network Node or the operation of the Network Node. The higher the load of the processing unit or control unit, the higher the resource usage level of the Network Node. In the same manner as for the radio resource usage level, there may be more than one threshold defined with regards to the current load of the processing unit or control unit. The possible plurality of thresholds provides the Network Node with information with regards to the current load of the processing unit or control unit. The thresholds may be expressed as a percentage of the maximum capacity, i.e. 100%, of the processing unit or control unit. Also this/these threshold(s) may be defined by e.g. the OAM server or it/they may be predefined in the Network Node.

According to still an embodiment, determining 120 a resource usage level of the Network Node comprises determining a level of memory utilisation or a status of buffers of the Network Node.

A Network Node may comprise one or more different memories and/or different buffers. A relatively high utilisation of the memories, i.e. a relatively high usage level of the memories, may be used as a measurement of resource usage level of the Network Node. Merely as an example, if the Network Node comprises memories of storing capacity 1 G bytes and the free, or available, memory size is 20 M bytes, then the memory or memories are utilised to a high degree which then corresponds to a high resource usage level of the Network Node.

Another example is that the Network Node comprises buffers of a certain capacity, and that the capacity of the buffers is used to e.g. 80% of their maximum capacity, then the buffer(s) is/are utilised to a high degree which then corresponds to a high resource usage level of the Network Node.

According to yet an embodiment, determining the resource usage level of the Network Node comprises comparing a number of mobile devices currently being served by the Network Node with a first number threshold.

This is yet another example of a measure of the resource usage level of the Network Node. This measure may not be as exact as the other two examples as it does not give any information of which services the different mobile devices are currently making use of. Different services may result in varying amount of uplink or downlink transmissions. However, it may still be a good measure since the larger the amount of mobile devices currently being served by the Network Node, the more resources of the Network Node are being used. This together with e.g. statistics of the likelihood of different services being utilised may provide the Network Node with ample information to deduce a current resource usage level of the Network Node. It may be that one service, out of the available services, is statistically used to a level of 10% and the service may result in a relatively high amount of downlink and/or uplink transmissions; whereas a second service is statistically used to a level of 60% and this service may result in a relatively low amount of downlink and/or uplink transmissions. This statistical information used together with the number of mobile devices may provide the Network Node with ample information to determine the resource usage level of the Network Node.

According to an embodiment, if any of the current usage level of radio resources, the current load of a processing unit and the number of mobile devices currently being served by the Network Node is above their respective first threshold, then the Network Node determines the resource usage level of the Network Node to be high, and if the current usage level of radio resources, the current load of a processing unit and the of mobile devices currently being served by the Network Node are below their respective first threshold, then the Network Node determines the resource usage level of the Network Node to be low.

As described above, there may be more than one threshold for each of the different measures of the current usage level of radio resources. However, at least one threshold is defined so that if the current usage level of radio resources, the current load of a processing unit or the of mobile devices currently being served by the Network Node, respectively, is above its respective first threshold, then the Network Node determines that the resource usage level of the Network Node is high.

The Network Node may use only one of these measurements, all three or any combination of two of the three measurements to determine if the current resource usage level of the Network Node is high or low.

According to still an embodiment, the user profile comprises at least two alternative values for a parameter associated with the mobile device or user profile, or Radio Access Bearer, wherein if the resource usage level of the Network Node is high, the Network Node selects a first value of the at least two alternative values, and if the resource usage level of the Network Node is low, the Network Node selects a second value of the at least two alternative values.

The user profile may comprise a plurality of different parameters associated with the mobile device, and the user profile may further comprise different recommended values for the different parameters, wherein the different recommended values are related to the current resource usage level of the Network Node. There are at least two values for the parameters, or in other words, there may be a set of different values for individual parameters.

In other words, if the Network Node determines that the resource usage level is low, then the Network Node will use one of the values for a specific parameter in the user profile when making its scheduling decision for downlink and/or uplink transmission between the Network Node and the mobile device. If the Network Node determines that the resource usage level is high, then the Network Node will use another of the values for the specific parameter in the user profile when making its scheduling decision for transmission to and/or from the mobile device.

The parameters in questions are associated to the downlink and/or uplink transmissions. The Network Node may take all the different parameters into consideration when making the scheduling decision for downlink and/or uplink transmission, or the Network Node may take some of the different parameters into consideration, or only one of the parameters when scheduling downlink and/or uplink transmission between the Network Node and the mobile device.

As stated above, the Network Node may determine the resource usage level to be high or low based on one, two or three of the above examples of determining the current resource usage level of the Network Node.

Merely as an example, assume the user profile comprise only one parameter associated with e.g. downlink transmissions to the mobile device, and that the user profile comprise only two values for the parameter, one value recommended to be used when the resource usage level of the Network Node is low and a second value recommended to be used when the resource usage level of the Network Node is high. Then if the Network Node determines the resource usage level to be low, the Network Node will use the first value when scheduling downlink transmission to the mobile device; and if the Network Node determines the resource usage level to be high, the Network Node will use the second value when scheduling downlink transmission to the mobile device.

According to yet an embodiment, the at least two alternative values in the user profile associated with the mobile device or Radio Access Bearer define a maximum and a minimum value for the parameter.

As described above, there may be more than one threshold defined for each of the different examples of resource usage level. The more thresholds defined for a measurement of resource usage level, the more parameters may be comprised in the user profile of the mobile device and used depending on a current resource usage level of the Network Node. However, there is at least one threshold defined for each of the different measurements of resource usage level and then consequently at least two alternative values for the parameter. If the current resource usage level of the Network Node is below the threshold then the minimum value for the parameter associated with downlink and/or uplink transmission(s) is used; and if the current resource usage level of the Network Node is above the threshold then the maximum value for the parameter associated with downlink and/or uplink transmission(s) is used.

According to an embodiment, the parameter associated with the mobile device is bitrate of the downlink and/or uplink transmission.

The values of the parameter may then define at least a minimum and a maximum bitrate to be used depending on the current resource usage level of the Network Node. One user, A, of a first mobile device may subscribe to a higher bitrate than a second user, B, of a second mobile device. Then, the bitrate parameter will have different values for user A and for user B. Merely as an example in the downlink, assume that user A subscribes, or pays, for a bitrate of 1 Mbps and user B subscribes, or pays, for a bitrate of 0.25 Mbps. Then in a scenario when the current resource usage level of the Network Node is low, the Network Node may ensure that both user A and user B are provided with their subscribed downlink bitrates, i.e. the maximum value of the parameter bitrate is 1 and 0.25 respectively. However, in case of the current resource usage level of the Network Node is high, then the respective user profiles of users A and B may state that user A should be provided with a downlink bitrate of 0.5Mbps and user B should not get any service at all. In other words, the minimum value for the bitrate parameter in the respective user profiles is 0.5 and 0 respectively. Again, this is merely an illustrative example. This illustrative example may equally be applied in an uplink situation.

According to still an embodiment, the user profile is a Quality-of-Service, QoS, profile, wherein the QoS profile comprises a priority level associated with the mobile device.

In case the user profile is a QoS profile comprising a priority level associated with the mobile device, the QoS may comprise values for different parameters, e.g. bitrate, which values will inform the Network Node how to prioritise different mobile devices in situations when the current resource usage level of the Network Node is high. The QoS profile of the mobile device is associated with a Radio Access Bearer. When the user profile is a QoS profile, then there is one QoS profile for each Radio Access Bearer available for the mobile device.

Merely as an example, again in the downlink, a user may subscribe, or pay, to be prioritised over other users during any circumstance. Merely as an example, assume that user C has subscribed to a high priority, user D has subscribed to a medium priority and that user E has not subscribed to any priority. Assume further in this illustrative example that the maximum bitrate possible to be provided by the Network Node is 1 Mbps. Still further, assume that the respective QoS user profiles of users C, D and E, for a specific Radio Access Bearer, have the following values with regard to a prioritisation parameter: "C: 1 and 0.75", "D: 1 and 0.5" and "E: 0.5 and 0". In a scenario when the current resource usage level of the Network Node is low, user C and D may be equally prioritised receiving downlink transmissions of 1 Mbps, i.e. the maximum bitrate possible and user E will never receive downlink transmission with a transmission speed exceeding 0.5 Mbps. However, if the current resource usage level of the Network Node increases so that the level exceeds the threshold resulting in the resource usage level of the Network Node becoming high, the Network Node starts employing the second prioritisation parameter. Then user C subscribing to high priority will still receive a relatively high bitrate as it is still to be prioritised, however the bitrate is somewhat reduced. User D will only receive downlink transmissions at a medium rate as user D only subscribes to medium priority. The medium speed may be considerably reduced compared to the maximum transmission speed. Further, user E may not receive any downlink transmissions at all since user E does not subscribe to any priority. Again, this is merely an illustrative example of how to employ different prioritisation parameters.

According to an embodiment, scheduling the downlink and/or uplink transmission between the Network Node and the mobile device is based on both the user profile and the resource usage level whereby the Network Node schedules downlink and/or uplink transmission using the first parameter if the resource usage level of the Network Node is high and schedules downlink and/or uplink transmission using the second parameter if the resource usage level of the Network Node is low.

According to yet an embodiment, the wireless communication network is based on Global System for Mobile Communication, GSM, wherein the Network Node is a Base Station, BS, or a BS Controller, BSC.

The method and the Network Node may be employed in different radio access networks depending on the technology of the communication network. In case the wireless communication network is based on GSM, the Network Node is a BS or a BSC. The bitrate may then be increased or decreased e.g. by scheduling downlink and/or uplink transmissions between the Network Node and the mobile device in more or less number of time slots out of available time slots.

According to another embodiment, the wireless communication network is based on Long Term Evolution, LTE, wherein the Network Node is an evolved Node B, eNB.

In case the wireless communication network is based on LTE, the bitrate may be or decreased e.g. by scheduling downlink and/or uplink transmissions between the Network Node and the mobile device in more or less frequencies out of available frequencies.

According to still another embodiment, the wireless communication network is based on Universal Mobile Telecommunications System, UMTS, wherein the Network Node is a Node B, NB, or a Radio Network Controller, RNC.

This is yet another example of a wireless communication network in which the Network Node may be employed, here as a NB or RNC. The RNC provides control functionalities for one or more NBs. A NB and an RNC can be the same device, although typical implementations have a separate RNC located in a central office serving multiple NBs. The bitrate may be or decreased e.g. by scheduling transmissions to and/or from the mobile device in more or less frequencies out of available frequencies.

Embodiments herein also relate to a Network Node adapted for downlink and/or uplink transmission between the Network Node and a mobile device. The Network Node has the same technical features, objects and advantages as the method performed by the Network Node. The Network Node will therefore only be described in brief in order to avoid unnecessary repetition.

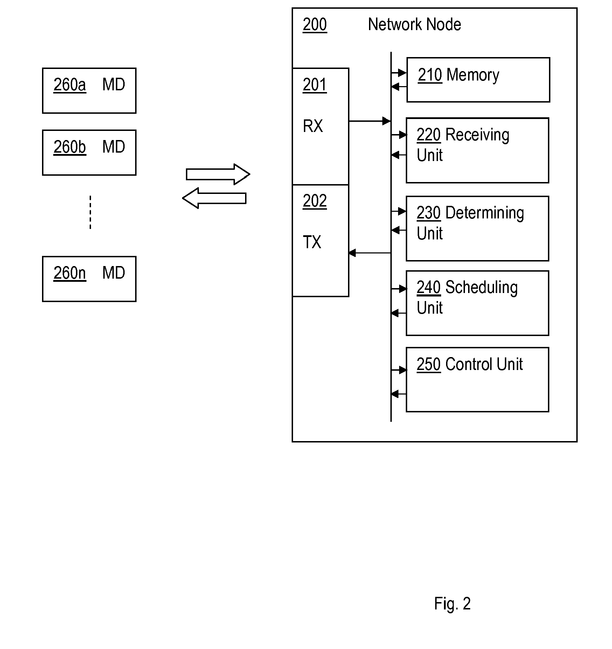

Exemplifying embodiments of a Network Node operable in a RAN of a wireless communication network adapted for downlink and/or uplink transmission between the Network Node and a mobile device will now be described with reference to figure 2.

Figure 2 illustrates the Network Node 200 comprising a receiving unit 220 adapted for receiving, from a node in a core network of the wireless communication network, a user profile of the mobile device; a determining unit 230 adapted for determining a resource usage level of the Network Node 200. The Network Node further comprises a scheduling unit 240 adapted for scheduling a downlink and/or uplink transmission between the Network Node and the mobile device based on both the user profile and the resource usage level.

The Network Node may have several advantages. Dynamic policy enforcement is achieved depending on e.g. the current resource usage level of the Network Node. In case the Network Node is close to, or reaches, a certain level of resource usage, the Network Node may take measures to avoid any possible increase of the resource usage level in order to avoid an overload or congestion situation. The Network Node is enabled to make prioritisations and/or apply different bitrates by using the resource usage level in combination with the user profile of the mobile device. Still further, there is no need for extensive signalling between the Network Node and the core network of the communication network in case of a overload or congestion situation in order for the core network to provide the Network Node with instructions how the handle the situation. Any additional signalling in an overload or congestion situation should be avoided as such signalling may further increase the overload or congestion situation of the Network Node.

According to an embodiment, the determining unit 230 is adapted to determine a resource usage level of the Network Node by comparing a current usage level of radio resources with a first resource threshold.

According to still an embodiment, the determining unit 230 is adapted to determine a resource usage level of the Network Node by comparing a current usage level of a subset of radio resources with a second resource threshold.

According to another embodiment, the determining unit 230 is adapted to determine a resource usage level of the Network Node by comparing a current load of a processing unit of the Network Node with a first load threshold.

According to yet an embodiment, the determining unit 230 is adapted to determine a resource usage level of the Network Node by determining a level of memory utilisation or a status of buffers of the Network Node.

According to yet another embodiment, the determining unit 230 is adapted to determine a resource usage level of the Network Node by comparing a number of mobile devices currently being served by the Network Node with a first number threshold.

According to an embodiment, if any of the current usage level of radio resources, the current load of a processing unit and the number of mobile devices currently being served by the Network Node is above their respective first threshold, then the determining unit is adapted to determine that the resource usage level of the Network Node is high, and if the current usage level of radio resources, the current load of a processing unit and the of mobile devices currently being served by the Network Node are below their respective first threshold, then the determining unit is adapted to determine that the resource usage level of the Network Node is low.

According to still an embodiment, the user profile comprises at least two alternative values for a parameter associated with the mobile device or user profile, and/or Radio Access Bearer, wherein if the resource usage level of the Network Node is high, the determining unit is adapted to select a first value of the at least two alternative values, and if the resource usage level of the Network Node is low, the determining unit is adapted to select a second value of the at least two alternative values.

According to yet an embodiment, the at least two alternative values in the user profile associated with the mobile and/or Radio Access Bearer device define a maximum and a minimum value for the parameter.

According to an embodiment, the parameter associated with the mobile device is bitrate of the downlink transmission.

According to still an embodiment, the user profile is a QoS profile, wherein the QoS profile comprises a priority level associated with the mobile device.

According to yet an embodiment, the scheduling unit 240 is adapted to schedule the downlink and/or uplink transmission between the Network Node and the mobile device based on both the user profile and the resource usage level whereby the Network Node schedules downlink and/or uplink transmission using the first parameter if the resource usage level of the Network Node is high and schedules downlink and/or uplink transmission using the second parameter if the resource usage level of the Network Node is low.

According to an embodiment, the wireless communication network is based on GSM wherein the Network Node is a BS or a BSC.

According to still an embodiment, the wireless communication network is based on LTE, wherein the Network Node is an eNB.

According to yet an embodiment, the wireless communication network is based on UMTS, wherein the Network Node is a NB or a RNC.

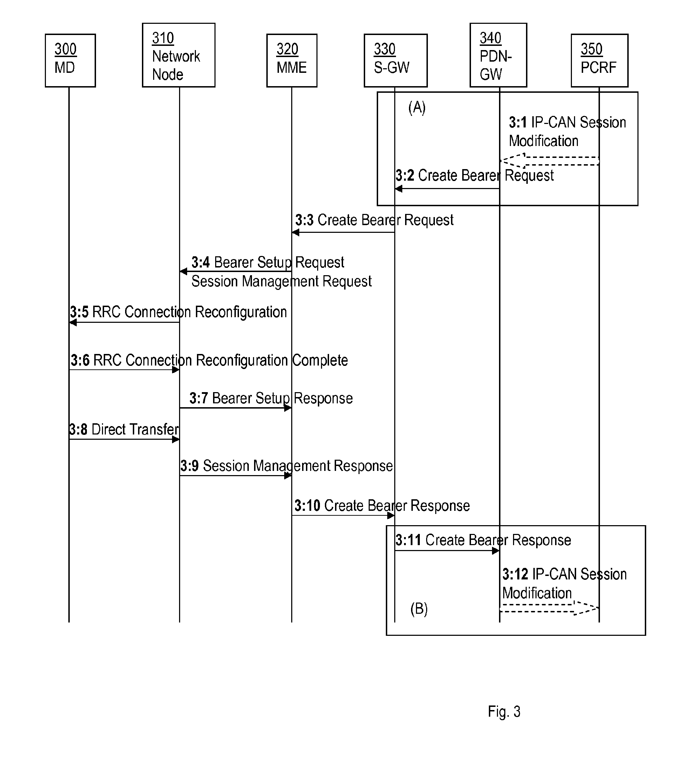

Figure 3 is a signalling diagram for creating a dedicated bearer according to an exemplifying embodiment.

The signalling illustrated in figure 3 corresponds to signalling diagram 5.4.1-1 of 3^{rd} Generation Partnership Project, 3GPP, TS 23.401. The difference is that the signals will comprise more, or additional, information in order to provide the Network Node with the user profiles of the mobile devices comprising the different values for the different parameters associated with downlink and/or uplink transmissions between the Network Node and the mobile devices. In other words, QoS policies and related Evolved Packet System, EPS, bearer QoS and radio nearer QoS will include several options for the QoS parameters. Some examples of QoS parameters are QoS Class Identifier, QCI, Allocation Retention Priority, ARP, Guaranteed Bit Rate, GBR and Maximum Bit Rate, MBR. Which option, or value, of the parameter that will be used by the Network Node may depend on the resource usage level of the Network Node as described above. This signalling takes place whenever a Radio Access Bearer (RAB) is set up towards the mobile device 300, MD.

If dynamic Policy and Charging Control, PCC, is deployed in the wireless communication network, the Policy and Charging Rules Function 350, PCRF, sends a PCC decision provision, i.e. a QoS policy, message to the Packet Data Network GateWay 340, PDN-GW. This is illustrated by the signal **3:1** IP-CAN Session Modification in figure 3. If dynamic PCC is not deployed, the PDN-GE 340 may apply local QoS policy. By a local QoS policy is meant that the PDN-GW 340 may apply 'local' policies if no QoS policy is received from the PCRF 350. In other words, the PDN-GW 340 may decide, or define, the QoS to apply.

The PDN-GE 340 either uses the QoS policy received from the PCRF 350 or the local QoS policy to assign the EPS Bearer QoS, i.e. the PDN-GE 340 assigns the different values to the bearer level QoS parameters QCI, ARP, GBR and MBR and sends a **3:2** Create Bearer Request to the Serving GateWay 330, S-GW, the request comprising the different values of the parameters.

The S-GW 330 receives the **3:2** Create Bearer Request and sends the corresponding **3:3** Create Bearer Request to the Mobility Management Entity, MME 320, the **3:3** Create Bearer Request comprising International Mobile Subscriber Identity, IMSI, Packet Type Identifier, PTI, EPS Bearer QoS, Traffic Flow Template, TFT, S1-Tunnel Endpoint Identifier ,S1-TEID, PDN GW TEID (GTP-based S5/S8), Linked EPS Bearer Identity, LBI and Protocol Configuration Options.

The MME 320 selects an EPS Bearer Identity, which has not yet been assigned to the mobile device 300. The MME 320 then builds a **3:4** Session Management Request, which the MME 320 sends to the Network Node 310. The **3:4** Session Management Request comprises PTI, TFT, EPS Bearer QoS parameters (excluding ARP). The MME 320 uses the EPS Bearer QoS parameters to derive the corresponding Packet Data Protocol, PDP, context parameters QoS Negotiated (R99 QoS profile), Radio Priority, Packet Flow Id and TI. The MME 320 includes these in the **3:4** Session Management Request which is sent to the Network Node 310.

The Network Node 310 receives the request and maps the EPS Bearer QoS to the Radio Bearer QoS. The Network Node 310 then signals a **3:5** Radio Resource Control, RRC, Connection Reconfiguration message to the mobile device 300. The **3:5** RRC Connection Reconfiguration message comprises the Radio Bearer QoS, Session Management Request and EPS RB Identity. The mobile device 300 stores the QoS Negotiated, Radio Priority, Packet Flow Identity and the TI, which are comprised in the Session Management Request. The stored information may then be used when accessing the network via GSM Enhanced Radio Access Network, GERAN, or Universal Terrestrial Radio Access Network, UTRAN.

The mobile device 300 acknowledges the radio bearer activation to the Network Node 310 with a **3:6** RRC Connection Reconfiguration Complete message.

The Network Node 310 then acknowledges the radio bearer activation to the MME 320 with a **3:7** Bearer Setup Response message, which comprises EPS Bearer identity, S1-TEID). The Network Node 310 indicates to the MME 320 whether the requested EPS Bearer QoS could be allocated or not.

The mobile device 300 then sends a **3:8** Direct Transfer message to the Network Node 310, the message comprising a Session Management Response.

The Network Node 310 sends an Uplink NAS Transport message in the form of a **3:9** Session Management Response message to the MME 320.

Upon reception of the **3:7** Bearer Setup Response message and the **3:9** Session Management Response message, the MME 320 acknowledges the bearer activation to the S-GW 330 by sending a **3:10** Create Bearer Response message to the S-GW 330.

The S-GW 330 in turn acknowledges the bearer activation to the PDN-GW 340 by sending a **3:11** Create Bearer Response message to the PDN-GW 340.

If the dedicated bearer activation procedure was triggered by a PCC Decision Provision message from the PCRF 350, the PDN-GW 340 indicates to the PCRF 350 whether the requested PCC decision (QoS policy) could be enforced or not, allowing the completion of the PCRF-initiated IP-CAN Session Modification procedure or a Policy Control Enforcement Function, PCEF,-initiated IP-CAN Session Modification procedure. If requested by the PCRF 350, the PDN-GW 340 indicates User Location Information and/or Time Zone Information of the mobile device to the PCRF 350.

As can be seen in the above example, existing signalling is used, but the signals will comprise more, or additional, information in order to provide the Network Node with the user profiles of the mobile devices comprising the different values for the different parameters associated with downlink and/or uplink transmissions between the Network Node and the mobile devices.

In figure 2, the Network Node 200 is also illustrated comprising a receiving unit 201 and a transmitting unit 202. Through these two units, the Network Node 200 is adapted to communicate with other nodes and/or entities in the wireless communication network. The receiving unit 201 may comprise more than one receiving arrangement. For example, the receiving unit may be connected to both a wire and an antenna, by means of which the Network Node 200 is enabled to communicate with other nodes and/or entities in the wireless communication network. Similarly, the transmitting unit 202 may comprise more than one transmitting arrangement, which in turn are connected to both a wire and an antenna, by means of which the Network Node 200 is enabled to communicate with other nodes and/or entities in the wireless communication network. The Network Node 200 further comprises a memory 210 for storing data. Further, the Network Node 200 is illustrated comprising a control or processing unit 250 which in turns is connected to the different units 220-240. It shall be pointed out that this is merely an illustrative example and the Network Node 200 may comprise more, less or other units or modules which execute the functions of the Network Node 200 in the same manner as the units illustrated in figure 2.

It should be noted that figure 2 merely illustrates various functional units in the Network Node 200 in a logical sense. The functions in practice may be implemented using any suitable software and hardware means/circuits etc. Thus, the embodiments are generally not limited to the shown structures of the Network Node 200 and the functional units. Hence, the previously described exemplary embodiments may be realised in many ways. For example, one embodiment includes a computer-readable medium having instructions stored thereon that are executable by the control or processing unit 250 for executing the method steps performed by the Network Node 200. The instructions executable by the computing system and stored on the computer-readable medium perform the method steps of the Network Node 200 as set forth in the claims.

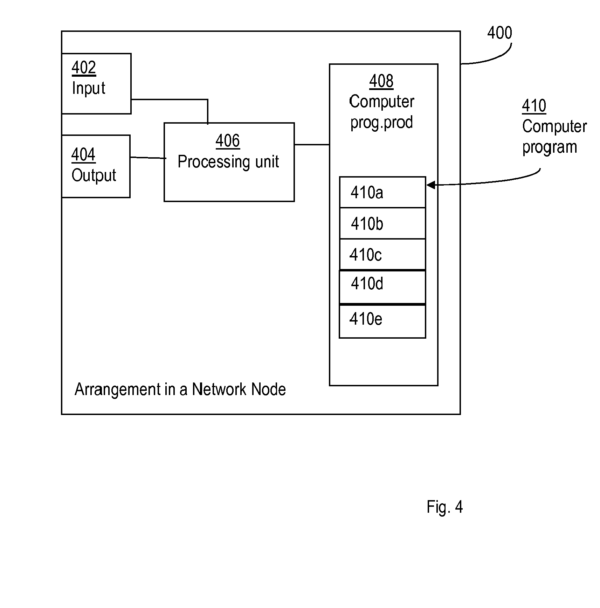

Figure 4 schematically shows an embodiment of an arrangement in a Network Node 400. Comprised in the Network Node 400 are here a processing unit 406, e.g. with a DSP (Digital Signal Processor). The processing unit 406 may be a single unit or a plurality of units to perform different actions of procedures described herein. The Network Node 400 may also comprise an input unit 402 for receiving signals from other entities, and an output unit 404 for providing signal(s) to other entities. The input unit and the output unit may be arranged as an integrated entity or as illustrated in the example of figure 2, as one or more interfaces 201/202.

Furthermore, the Network Node 400 comprises at least one computer program product 408 in the form of a non-volatile memory, e.g. an EEPROM (Electrically Erasable Programmable Read-Only Memory), a flash memory and a hard drive. The computer program product 408 comprises a computer program 410, which comprises code means, which when executed in the processing unit 406 in the Network Node 400 causes the Network Node 400 to perform the actions e.g. of the procedure described earlier in conjunction with figure 1.

The computer program 410 may be configured as a computer program code structured in computer program modules 410a-410e. Hence, in an exemplifying embodiment, the code means in the computer program of the Network Node 400 comprises a receiving unit for receiving, from a node in a core network of the wireless communication network, a user profile of the mobile device. The computer program further comprises determining unit for determining a resource usage level of the Network Node. The computer program further comprises a scheduling unit for transmitting scheduling a downlink and/or uplink transmission between the Network Node and the mobile device based on both the user profile and the resource usage level.

The computer program modules could essentially perform the actions of the flow illustrated in figure 1, to emulate the Network Node 200 of figure 2. In other words, when the different computer program modules are executed in the processing unit 406, they may correspond to the units 220-240 of figure 2.

Although the code means in the embodiments disclosed above in conjunction with figure 2 are implemented as computer program modules which when executed in the processing unit causes the Network Node to perform the actions described above in the conjunction with figures mentioned above, at least one of the code means may in alternative embodiments be implemented at least partly as hardware circuits.

The processor may be a single CPU (Central processing unit), but could also comprise two or more processing units. For example, the processor may include general purpose microprocessors; instruction set processors and/or related chips sets and/or special purpose microprocessors such as ASICs (Application Specific Integrated Circuit). The processor may also comprise board memory for caching purposes. The computer program may be carried by a computer program product connected to the processor. The computer program product may comprise a computer readable medium on which the computer program is stored. For example, the computer program product may be a flash memory, a RAM (Random-access memory) ROM (Read-Only Memory) or an EEPROM, and the computer program modules described above could in alternative embodiments be distributed on different computer program products in the form of memories within the Network Node.

The following section describes example embodiments of the present invention.

### 1. Method Embodiment

A method (100) performed by a Network Node in a Radio Access Network, RAN, of a wireless communication network for downlink and/or uplink transmission between the Network Node and a mobile device, according to a first embodiment, the method comprising:
- receiving (110), from a node in a core network of the wireless communication network, a user profile of the mobile device,
- determining (120) a resource usage level of the Network Node, and
- scheduling (130) a downlink and/or uplink transmission between the Network Node and the mobile device based on both the user profile and the resource usage level.

### 2. Method Embodiment

Method (100) according to the first method embodiment, wherein determining (120) a resource usage level of the Network Node comprises comparing a current usage level of radio resources with a first resource threshold.

### 3. Method Embodiment

A method (100) according to the first method embodiment, wherein determining (120) a resource usage level of the Network Node comprises comparing a current usage level of a subset of radio resources with a second resource threshold.

### 4. Method Embodiment

A method (100) according to the first or second method embodiment, wherein determining (120) a resource usage level of the Network Node comprises comparing a current load of a processing unit of the Network Node with a first load threshold.

### 5. Method Embodiment

A method (100) according to the first or second method embodiment, wherein determining (120) a resource usage level of the Network Node comprises determining a level of memory utilisation or a status of buffers of the Network Node.

### 6. Method Embodiment

A method (100) according to any of method embodiments 1-5, wherein determining (120) a resource usage level of the Network Node comprises comparing a number of mobile devices currently being served by the Network Node with a first number threshold.

### 7. Method Embodiment

A method (100) according to any of method embodiments 1-6, wherein if any of the current usage level of radio resources, the current load of a processing unit and the number of mobile devices currently being served by the Network Node is above their respective first threshold, then the Network Node determines the resource usage level of the Network Node to be high, and if the current usage level of radio resources, the current load of a processing unit and the of mobile devices currently being served by the Network Node are below their respective first threshold, then the Network Node determines the resource usage level of the Network Node to be low.

### 8. Method Embodiment

A method (100) according to method embodiment 7, wherein the user profile comprises at least two alternative values for a parameter associated with the mobile device or user profile, and/or Radio Access Bearer, wherein if the resource usage level of the Network Node is high, the Network Node selects a first value of the at least two alternative values, and if the resource usage level of the Network Node is low, the Network Node selects a second value of the at least two alternative values.

### 9. Method embodiment

A method (100) according to method embodiment 8, wherein the at least two alternative values in the user profile associated with the mobile device and/or Radio Access Bearer define a maximum and a minimum value for the parameter.

### 10. Method embodiment

A method (100) according to method embodiment 8 or 9, wherein the parameter associated with the mobile device is bitrate of the downlink and/or uplink transmission.

### 11. Method embodiment

A method (100) according to any of method embodiments 1-10, wherein the user profile is a Quality-of-Service, QoS, profile, wherein the QoS profile comprises a priority level associated with the mobile device.

### 12. Method embodiment

A method (100) according to any of method embodiments 8-11, wherein scheduling (130) the downlink and/or uplink transmission between the Network Node and the mobile device is based on both the user profile and the resource usage level whereby the Network Node schedules downlink and/or uplink transmission using the first parameter if the resource usage level of the Network Node is high and schedules downlink and/or uplink transmission using the second parameter if the resource usage level of the Network Node is low.

### 13. Method embodiment

A method (100) according to any of method embodiments 1-12, wherein the wireless communication network is based on Global System for Mobile Communication, GSM, wherein the Network Node is a Base Station, BS, or a BS Controller, BSC.

### 14. Method embodiment

A method (100) according to any of method embodiments 1-12, wherein the wireless communication network is based on Long Term Evolution, LTE, wherein the Network Node is an evolved Node B, eNB.

### 15. Method embodiment

A method (100) according to any of method embodiments 1-12, wherein the wireless communication network is based on Universal Mobile Telecommunications System, UMTS, wherein the Network Node is a Node B, NB, or a Radio Network Controller, RNC.

### 16. Network node embodiment

A Network Node (200) embodiment operable in a Radio Access Network, RAN, of a wireless communication network adapted for downlink and/or uplink transmission between the Network Node and a mobile device, the Network Node comprising:
- a receiving unit (220) adapted for receiving, from a node in a core network of the wireless communication network, a user profile of the mobile device,
- a determining unit (230) adapted for determining a resource usage level of the Network Node, and
- a scheduling unit (240) adapted for scheduling a downlink and/or uplink transmission between the Network Node and the mobile device based on both the user profile and the resource usage level.

### 17. Network node embodiment

A Network Node (200) according to network node embodiment 16, wherein the determining unit (230) is adapted to determine a resource usage level of the Network Node by comparing a current usage level of radio resources with a first resource threshold.

### 18. Network node embodiment

A Network Node (200) according to network node embodiment 16, wherein the determining unit (230) is adapted to determine a resource usage level of the Network Node by comparing a current usage level of a subset of radio resources with a second resource threshold.

### 19. Network node embodiment

A Network Node (200) according to network node embodiment 16 or 17, wherein the determining unit (230) is adapted to determine a resource usage level of the Network Node by comparing a current load of a processing unit of the Network Node with a first load threshold.

### 20. Network node embodiment

A Network Node (200) according to network node embodiment 16 or 17, wherein the determining unit (230) is adapted to determine a resource usage level of the Network Node by determining a level of memory utilisation or a status of buffers of the Network Node.

### 21. Network node embodiment

A Network Node (200) according to any of network node embodiments 16-20, wherein the determining unit (230) is adapted to determine a resource usage level of the Network Node by comparing a number of mobile devices currently being served by the Network Node with a first number threshold.

### 22. Network node embodiment

A Network Node (200) according to any of network node embodiments 16-21, wherein if any of the current usage level of radio resources, the current load of a processing unit and the number of mobile devices currently being served by the Network Node is above their respective first threshold, then the determining unit is adapted to determine that the resource usage level of the Network Node is high, and if the current usage level of radio resources, the current load of a processing unit and the of mobile devices currently being served by the Network Node are below their respective first threshold, then the determining unit is adapted to determine that the resource usage level of the Network Node is low.

### 23. Network node embodiment

A Network Node (200) according to network node embodiment 22, wherein the user profile comprises at least two alternative values for a parameter associated with the mobile device or user profile, and/or Radio Access Bearer, wherein if the resource usage level of the Network Node is high, the determining unit is adapted to select a first value of the at least two alternative values, and if the resource usage level of the Network Node is low, the determining unit is adapted to select a second value of the at least two alternative values.

### 24. Network node embodiment

A Network Node (200) according to network node embodiment 23, wherein the at least two alternative values in the user profile associated with the mobile device and/or Radio Access Bearer define a maximum and a minimum value for the parameter.

### 25. Network node embodiment

A Network Node (200) according to network node embodiment 22 or 23, wherein the parameter associated with the mobile device is bitrate of the downlink and/or uplink transmission.

### 26. Network node embodiment

A Network Node (200) according to any of network node embodiments 16-25, wherein the user profile is a Quality-of-Service, QoS, profile, wherein the QoS profile comprises a priority level associated with the mobile device.

### 27. Network node embodiment

A Network Node (200) according to any of network node embodiments 23-26, wherein the scheduling unit (240) is adapted to schedule the downlink and/or uplink transmission between the Network Node and the mobile device based on both the user profile and the resource usage level whereby the Network Node schedules downlink and/or uplink transmission using the first parameter if the resource usage level of the Network Node is high and schedules downlink and/or uplink transmission using the second parameter if the resource usage level of the Network Node is low.

### 28. Network node embodiment

A Network Node (200) according to any of network node embodiments 16-27, wherein the wireless communication network is based on Global System for Mobile Communication, GSM, wherein the Network Node is a Base Station, BS, or a BS Controller, BSC.

### 29. Network node embodiment

A Network Node (200) according to any of network node embodiments 16-27, wherein the wireless communication network is based on Long Term Evolution, LTE, wherein the Network Node is an evolved Node B, eNB.

### 30. Network node embodiment

A Network Node (200) according to any of network node embodiments 16-27, wherein the wireless communication network is based on Universal Mobile Telecommunications System, UMTS, wherein the Network Node is a Node B, NB, or a Radio Network Controller, RNC.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the embodiments and defined by the pending claims.

## Claims

1. A method (100) performed by a Network Node in a Radio Access Network, RAN, of a wireless communication network for downlink and/or uplink transmission between the Network Node and a mobile device, the method comprising:
• receiving (110), from a node in a core network of the wireless communication network, a user profile of the mobile device,
• determining (120) a resource usage level of the Network Node, and
• scheduling (130) a downlink and/or uplink transmission between the Network Node and the mobile device based on both the user profile and the resource usage level.

2. A method (100) according to claim 1, wherein determining (120) a resource usage level of the Network Node comprises comparing a current usage level of radio resources with a first resource threshold.

3. A method (100) according to claim 1, wherein determining (120) a resource usage level of the Network Node comprises comparing a current usage level of a subset of radio resources with a second resource threshold.

4. A method (100) according to claim 1 or 2, wherein determining (120) a resource usage level of the Network Node comprises comparing a current load of a processing unit of the Network Node with a first load threshold.

5. A method (100) according to claim 1 or 2, wherein determining (120) a resource usage level of the Network Node comprises determining a level of memory utilisation or a status of buffers of the Network Node.

6. A method (100) according to any of claims 1-5, wherein determining (120) a resource usage level of the Network Node comprises comparing a number of mobile devices currently being served by the Network Node with a first number threshold.

7. A method (100) according to any of claims 1-6, wherein if any of the current usage level of radio resources, the current load of a processing unit and the number of mobile devices currently being served by the Network Node is above their respective first threshold, then the Network Node determines the resource usage level of the Network Node to be high, and if the current usage level of radio resources, the current load of a processing unit and the of mobile devices currently being served by the Network Node are below their respective first threshold, then the Network Node determines the resource usage level of the Network Node to be low.

8. A method (100) according to claim 7, wherein the user profile comprises at least two alternative values for a parameter associated with the mobile device or user profile, and/or Radio Access Bearer, wherein if the resource usage level of the Network Node is high, the Network Node selects a first value of the at least two alternative values, and if the resource usage level of the Network Node is low, the Network Node selects a second value of the at least two alternative values.

9. A method (100) according to claim 8, wherein the at least two alternative values in the user profile associated with the mobile device and/or Radio Access Bearer define a maximum and a minimum value for the parameter.

10. A method (100) according to claim 8 or 9, wherein the parameter associated with the mobile device is bitrate of the downlink and/or uplink transmission.

11. A method (100) according to any of claims 1-10, wherein the user profile is a Quality-of-Service, QoS, profile, wherein the QoS profile comprises a priority level associated with the mobile device.

12. A method (100) according to any of claims 8-11, wherein scheduling (130) the downlink and/or uplink transmission between the Network Node and the mobile device is based on both the user profile and the resource usage level whereby the Network Node schedules downlink and/or uplink transmission using the first parameter if the resource usage level of the Network Node is high and schedules downlink and/or uplink transmission using the second parameter if the resource usage level of the Network Node is low.

13. A Network Node (200) operable in a Radio Access Network, RAN, of a wireless communication network adapted for downlink and/or uplink transmission between the Network Node and a mobile device, the Network Node comprising:
- a receiving unit (220) adapted for receiving, from a node in a core network of the wireless communication network, a user profile of the mobile device,
- a determining unit (230) adapted for determining a resource usage level of the Network Node, and
- a scheduling unit (240) adapted for scheduling a downlink and/or uplink transmission between the Network Node and the mobile device based on both the user profile and the resource usage level.

14. A Network Node (200) according to claim 13, wherein the determining unit (230) is adapted to determine a resource usage level of the Network Node by comparing a current usage level of radio resources with a first resource threshold.

15. A Network Node (200) according to claim 14, wherein the determining unit (230) is adapted to determine a resource usage level of the Network Node by comparing a current usage level of a subset of radio resources with a second resource threshold.
